# EUROPEAN PATENT APPLICATION

(11) **EP 1 936 185 A2**
(43) Date of publication of application: **25.06.2008**
(21) Application number: 06819991.8
(22) Date of filing: 21.09.2006
(51) Int. Cl.: F03D 3/00

(54) **TURBINE COMPRISING SELF-ORIENTATING BLADES**

(30) Priority: 23.09.2005 ES 200502313
(71) Applicant: Fleta Pérez, Mario, 50420 Cadrete Zaragoza (ES)
(72) Inventor: Fleta Pérez, Mario, 50420 Cadrete Zaragoza (ES)
(74) Representative: Carvajal y Urquijo, Isabel
(86) International application number: PCT/ES2006/000527
(87) International publication number: WO 2007/034018

(57) **Abstract**

The invention relates to a turbine comprising self-orientating blades. The invention consists of a support base (1), a main rotation axle (2) which is disposed perpendicular to the direction of incidence of the fluid and which rotates in relation to the base and a plurality of secondary axles (4-4') which are disposed at the intersection between at least one first axial plane of the main rotation axle (2) and a plurality of second planes which are perpendicular to the main rotation axle (2). According to the invention, each secondary axle (4-4') is divided into two axle shafts which are equipped with at least one blade (5-6, 5'-6') having a surface that is essentially perpendicular to the direction of incidence of the fluid. Moreover, the blade (5-5') of one of the axle shafts is moved 90° in relation to the blade (6-6') of the other axle shaft. The distance separating the second axial planes from the main rotation axle (2) is smaller than the width of the blades (5-6, 5'-6') and the secondary axles (4-4') rotate freely in relation to the main rotation axle (2).

## Description

### Field and Object of the Invention

The invention is comprised within the field of energy transformation and more specifically, it relates to a device which can transform the energy of a stream of moving fluid into another type of energy such as electric energy for example, such device can be used both in eolian installations such as wind generators or gas turbines for example, and in hydraulic installations such as hydraulic pumps or turbines for example.

### State of the Art

Multiple devices for energy transformation are currently known, most of such devices usually transform the energy of a stream of fluid into electric energy, such devices are usually called wind generators or eolian machines for the case in which the fluid is in a gaseous state (air) or hydraulic machines or turbines in the case in which the fluid is in a liquid state (water).

In most cases, such devices are formed by a plurality of blades connected to a rotation axle, the gas or the liquid impinging on such blades and making them rotate, said mechanical energy being transformed into electric energy through different converter elements. There are multiple configurations as regards the shape, arrangement and mobility of the blades between one another and in relation to the rotation axle.

Two large groups of devices could be distinguished, a first group in which the rotation axle is parallel to the direction of incidence of the fluid, such group includes most known wind generators, which normally comprise a tower or fust which is placed on the ground, perpendicular thereto, at the free end of which, on a platform, there is arranged a stator or fixed part and a rotor or mobile part, the rotation axle of which is perpendicular to the shaft of the tower at the end of which the mentioned vanes or blades, which are variable in number, are arranged. The mentioned devices usually have a large size and need considerable flow speeds in order to start them up and obtain acceptable energy efficiencies.

The second group is formed by the devices the rotation axle of which is perpendicular to the direction of incidence of the fluid, said devices, for the case of wind generators, usually comprise a fixed base on which there is arranged a rotating part in the form of an axle on which the vanes or blades are arranged. The present invention is included in this second group.

Within the second group, Utility Model 1057162 describes a wind generator with a vertical axle consisting of a wind vane and a rotating structure in relation to a foot, at least a second axle being arranged perpendicular to the previous axle with the possibility of rotation about itself on which blades are arranged at the ends thereof in order to be pushed by the kinetic energy of the wind, the angular positions of the blades of each of the ends of said second axle being moved in relation to one another. The axle bearing the blades is driven by means of a transmission mechanism varying the angular position of the blades according to the position of the wind vane. The blades are located such that the end of the second axle is centered in relation to such blades.

In this wind generator, the blades are orientated through hydraulic or pneumatic cylinders or a reducer acting on a gear integral with said axle. The drawback of said wind generator is that the actuation by the mentioned mechanisms needs auxiliary installations the complication and cost of which are high, the reaction time in the actuation is furthermore too long when high fluid speeds occur.

Spanish invention patent number 510620 describes a wind wheel with articulated blades the axle of which is vertical and therefore perpendicular to the direction of incidence of the wind, all its blades being assembled on radial arms which are hinged on horizontal axles perpendicular to the rotation axle of the wheel, the blades located on opposite ends of each of the hinge axles are moved 90 degrees and have stops to limit the rotation of the blades when they are located in a plane parallel to that defined by the rotation axle of the wheel and the hinge axle of each blade.

The problem of the mentioned wind wheel is that for gusts of wind with variable speeds and changing angles of incidence, the device cannot rotate regularly, given that all the blades tend to remain in a vertical position, the thrust of air being counteracted in opposite blades.

Finally, Spanish invention patent number 2116881 describes an apparatus converting wind energy into another usable energy which consists of a support bearing a vertical rotation axle in relation to the support. The apparatus has groups of two horizontal parallel axles superimposed with one another located at the upper part of the first axle, the groups of two axles having blades, one blade on each of the two axles of each group of axles, the blades of opposite ends of the two axles of each group being moved in relation to one another by a 90 degree angle and gears being arranged to make the blades of one end rotate in opposite directions so that if, due to the action of the wind, the blades that were initially in a vertical position rotate towards a horizontal position, the opposite blades which were initially in a horizontal position are now in a vertical position.

The greatest drawback of the mentioned apparatus is that the rotation transmission system between the two axles of each group of axles, which is carried out through gears, causes large losses of energy in said transmission since a high incidence speed of air is necessary to move the gears. In addition, the blades are located in the pairs of axles at quite a distance from the rotation axles and the pairs of axles have a small section.

Due to the foregoing, a need has been detected to provide a turbine having a main rotation axle perpendicular to the direction of incidence of the fluid and a plurality of secondary axles, each of the secondary axles having blades at both ends, the homologous secondary axles, which are located in one and the same plane axially cutting the main rotation axle, being separated by a distance smaller than the width of the blades, said secondary axles being able to rotate in relation to the main axis and counterweights being arranged in the same plane of the blade right at the opposite side of the axle such that said counterweights will aid in moving the blades or vanes from an initial rest position thereof to a work position in which the opposite blades of one and the same axle will be moved 90°, one of them being located perpendicular to the direction of incidence of the fluid and the other one being located parallel to said direction. As a result of the mentioned arrangement of the blades, of the movement of the secondary axles in relation to the main axle, of the placement of the blades in relation to their respective secondary axles and of the placement and configuration of the mentioned counterweights, it is achieved that the start of the movement of the turbine requires low incidence speeds of the fluid and that the rotation of the assembly is carried out more efficiently, the output obtained in the transformed energy being considerably higher.

This objective is achieved by means of the invention as it is defined in claim 1, and preferred embodiments of the invention are defined in the dependent claims.

### Description of the Invention

The present invention relates to a turbine comprising self-orientating blades which comprises a support base, a main rotation axle perpendicular to the direction of incidence of the fluid, configured to rotate in relation to the mentioned support base and a plurality of secondary axles located at the intersection between at least one first axial plane of the main rotation axle and a plurality of second planes which are perpendicular to said main rotation axle, each secondary axle being divided into two axle shafts by the main rotation axle, each axle shaft having at least one blade integrally joined to said axle shaft such that the blade has a surface that is substantially perpendicular to the direction of incidence of the fluid and the blade of one of the axle shafts being moved 90° in relation to the blade of the other axle shaft.

In the turbine object of the present invention, the distance separating the second axial planes from the main rotation axle is smaller than the width of the blades and the secondary axles rotate freely in relation to the main rotation axle.

Thus, when the moving fluid impinges on the blades which in a rest position are located at 45° in relation to the horizontal of the floor for the case of both axle shafts of each secondary axle, the blades of one of the axle shafts of each of the secondary axles adopt a position perpendicular to the direction of incidence of the fluid, whereas the blades of the opposite axle shaft, upon being moved 90° in relation to the previous blades, will be placed in a position parallel to the mentioned direction of incidence.

In addition, the fact that the distance separating the second axial planes from the main rotation axle is smaller than the width of the blades, for the case of a first plane that is axial to the main rotation axle, determines the existence of a plurality of secondary axles parallel to one another, the distance separating them therefore being smaller than the width of the blade. Each of the blades is furthermore attached to each axle shaft from a joining edge.

This condition makes each of the mentioned secondary axles act as a stop in the pivoting movement of the axle, and therefore of the blade integrally joined thereto, located immediately above the mentioned axle, making the effect of resistance to the incidence of the fluid of each of the blades be accumulated and making the surface resistant to the incidence of the fluid of each of the blades of said parallel secondary axles behave as a single resistant surface including the total surface of the assembly of blades belonging to parallel secondary axles, the efficiency in the capture of energy involved in the moving fluid being much higher.

In the axle shafts opposite to the mentioned axle shafts of the parallel secondary axles, the position of all the blades will be moved 90° in relation to the blades of said other axle shafts and therefore parallel to the direction of incidence of the fluid, allowing said fluid to pass between the blades and preventing the rotational movement of the other blades from being counteracted, enabling the rotation of the assembly of blades of the parallel secondary axles.

Each axle shaft has a counterweight diametrically opposite to the blade to reduce the turning torque of the secondary axle. The counterweight further consists of an element located at the upper edge of the blade in any one position selected from its free end and its end closest to the main rotation axle and more specifically each of the counterweights is located in the same plane as that defined by the surface of incidence of the respective blade to which it is associated.

The start of the pivoting movement of each of the blades of each of the main axles is thus facilitated, since less incidence speed of the fluid is necessary to achieve the pivoting of the blades from their rest position (45° in relation to the horizontal) to their work position. This system of counterweights further minimizes the adverse effects in the case of changing directions of incidence of the fluid and therefore makes the blades be self-orientating depending on the direction of incidence and on the speed of incidence of the fluid against the blades.

The main rotation axle will normally be hollow, this feature not being limiting and being able to be solid according to the cases.

In a first aspect of the invention, the secondary axles are organized in a plurality of groups of secondary axles, the ends of the secondary axles of one and the same group being equidistant and the secondary axles of one and the same group being located in one and the same plane.

In such case, for each group of secondary axles, the secondary axles, at their central area through which they traverse the main rotation axle, undergo a radius curvature such that their rotational movement is limited by the inner walls of the main rotation axle, the angular amplitude of the rotation of each of the secondary axles being a maximum of 90°

The concavities of the curvatures of the secondary axles of each group of secondary axles are additionally arranged such that for half the secondary axles the concavity of the mentioned curvature is opposite to the concavity of the remaining secondary axles of the group.

With the described configuration, it is achieved that although the secondary axles of one and the same group of axles are located in one and the same plane, as a result of the mentioned the curvatures, the simultaneous rotation of all the secondary axles in relation to the main rotation axle is allowed, the pivoting for said secondary axles of each group being limited to an angular amplitude that is not greater than 90°.

On the inner walls of the main rotation axle there are arranged respective shock-absorbing stops the position of which coincides with the contact area of the curvatures of each of the secondary axles of each of the groups of secondary axles with the inner wall of the main rotation axle.

The effects of the impacts of the curvatures of the secondary axles on the inner walls of the main rotation axle are thus minimized, this circumstance is very important because the noise of the impact is considerably absorbed and furthermore, the deterioration of both the mentioned curved area of the secondary axles and of the main rotation axle is slowed down, achieving a longer life in the use of the turbine.

In a second aspect of the present invention, the secondary axles are organized in a plurality of groups of secondary axles, the ends of the secondary axles of one and the same group being equidistant and the secondary axles of one and the same group being located in parallel planes separated by a reduced distance.

In this case, the axles of one and the same group of secondary axles are separated by a certain distance, being able to rotate in relation to the main rotation axle without needing to make a central curvature thereof.

For this particular case, for each group of axles each secondary axle, in its central area through which it traverses the main rotation axle, has attached thereto a drive element having a cogged area, a sliding element with a length smaller than the inner diameter of the main rotation axle being located after said drive element, which sliding element moves on a sliding track arranged inside the main rotation axle, the movement of the sliding element being perpendicular to said main rotation axle and also perpendicular to the secondary axle, also having a conjugated cogged area located opposite to the cogged area of the drive element, said sliding element sliding on the mentioned sliding track when the drive element rotates due to the effect of the rotation of the secondary axle, the movement of the sliding element taking place between two positions delimited by the walls of the main rotation axle such that the angular amplitude of the rotation of the mentioned axle is a maximum of 90°.

The pivoting movement of the secondary axles in relation to the main axle and therefore of the blades is thus limited to an angular amplitude that is never greater than 90° and the pivoting speed is regularized (made constant) as a result of the mentioned rack mechanism.

The sliding track, at its ends coinciding with the inner wall of the main rotation axle, will have respective shock-absorbing stops for the purpose of minimizing the impact of the sliding elements against the inner wall of the main rotation axle.

### Description of the Drawings

A series of drawings is very briefly described below which aid in better understanding the invention and which are expressly related to several embodiments of said invention which are set forth as illustrative and non-limiting examples thereof.

Figure 1 shows a perspective view of the turbine comprising self-orientating blades object of the present invention in a rest position.

Figure 2 shows a side view of a second embodiment of the turbine comprising self-orientating blades object of the present invention in a work position.

Figure 3 shows a plan view of the turbine comprising self-orientating blades object of the present invention in a work position.

Figure 4 shows a sectional detail, for a first embodiment of the invention, of the area of intersection between the main rotation axle and the secondary axles of one of the pairs of secondary axles of the turbine comprising self-orientating blades object of the present invention, according to section plane I-I of Figure 3 in which the blades have not been shown.

Figure 5 shows a sectional detail, for a second embodiment of the invention, of the area of intersection between the main rotation axles and the secondary axles of one of the pairs of secondary axles of the turbine comprising self-orientating blades object of the present invention, according to section plane I-I of Figure 3 in which the blades have not been shown.

### Description of Different Embodiments of the Invention

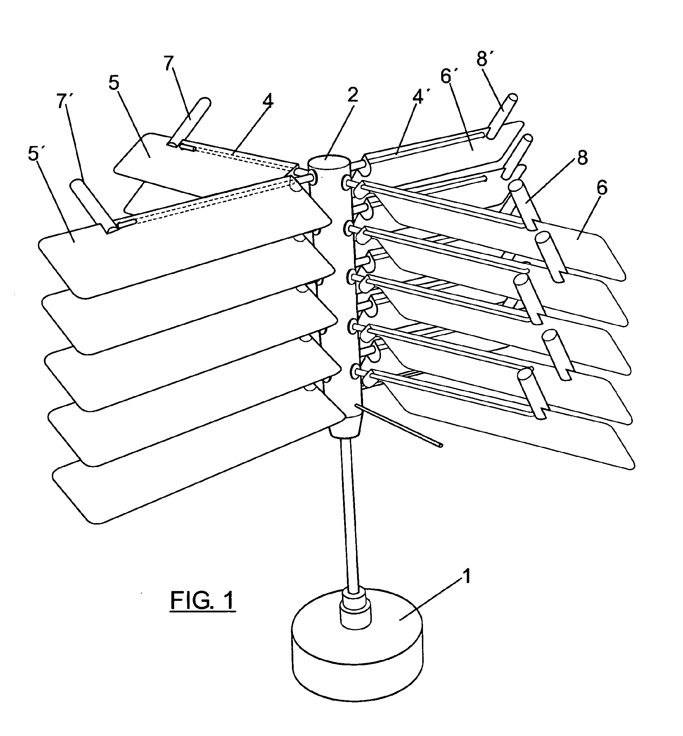

As can be seen in Figures 1, 2 and 3, the turbine comprising self-orientating blades object of the present invention comprises a support base (1), a main rotation axle (2) perpendicular to the direction of incidence (3) of the fluid, with the possibility of rotation in relation to the mentioned support base (1) and a plurality of pairs of secondary axles (4-4').

In this embodiment of the invention, there will be two groups of secondary axles parallel to one another. A group of first secondary axles (4) and another group of second secondary axles (4'). The number of groups of secondary axles in this case is 2, therefore reference will be made hereinafter to pairs of secondary axles instead of groups of secondary axles, nevertheless, a different number of groups of secondary axles comprised between 1 and n, for example 3, 4, 5, etc. could be arranged. As regards the number of secondary axles of each group of secondary axles, in this case it is five but it could be from 1 to m, where m is for example 1, 2, 3, 4, 6 etc.

The first secondary axles (4) and second secondary axles (4') traverse the main rotation axle (2), being located perpendicular to said main rotation axle (2) and as they must be equidistant to one another, in this case they will also be perpendicular to one another. Each of the secondary axles (4-4') will be divided into axle shafts by the main rotation axle (2).

In addition, both the first secondary axles (4) and the second secondary axles (4') of each pair of axles will have at least one blade (5, 6; 5', 6') in each of their axle shafts, the blades (5-5') of one of the axle shafts being moved 90° in relation to the blades (6-6') of the other axle shaft in both cases (first and second secondary axles). In the case of the present embodiments of the invention, only one blade has been arranged at each of the ends of each secondary axle, nevertheless as many blades as necessary can be placed. In the same manner, a total of 5 pairs of secondary axles have been placed, as many pairs of secondary axles as necessary being able to be placed, always taking into account that the last pair of secondary axles must be placed at a distance from the floor such that the blades joined thereto can rotate freely in relation to the main rotation axle without colliding with the floor.

Figure 1 shows the turbine in its rest position without the incidence of any fluid, in such position, the blades (5-6) and (5'-6') corresponding respectively to the secondary axles (4) and (4'), since they are of the same size and material, have identical masses and their weight tends to be mutually compensated therefore they are inclined at a 45° angle in relation to the horizontal direction, normally parallel to the floor.

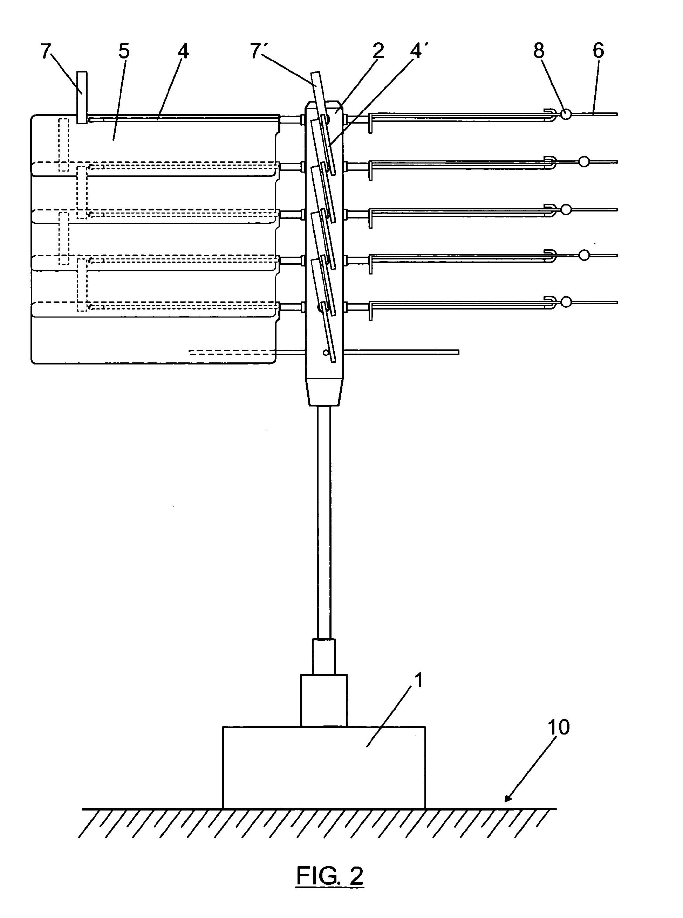

As can be seen Figure 2 for example, the first secondary axles (4) of each pair of axles are parallel to one another forming a group of first secondary axles which are located in one and the same plane which axially cuts the main rotation axle (2) and is perpendicular to the floor.

As regards the second secondary axles (4') of each pair of axles, they will also be parallel to one another, being located in one and the same plane which likewise axially cuts the main rotation axle (2) and is perpendicular to the group of parallel first secondary axles (4) and is likewise perpendicular to the floor.

Both the secondary axles (4) of the group of parallel first secondary axles and the secondary axles (4') of the group of parallel second secondary axles are separated from one another by a distance that is always smaller than the width of the blades, each secondary axle thus acts as a stop in the pivoting movement of the secondary axle and therefore of the blade integrally joined thereto, located immediately above such axle.

In addition, the secondary axles (4-4') of each pair of axles rotate freely in relation to the main rotation axle (2), therefore the blades (5-6; 5'-6') integrally joined to the axle shafts of said pairs of secondary axles will also rotate freely in relation to the main rotation axle (2).

Furthermore, each of the blades (5-6; 5'-6') are attached to the axle shafts of their respective secondary axles (4-4') from the upper edge thereof.

Such circumstance is quite important because, in combination with the separation between parallel secondary axles being smaller than the width of the blade, it allows the pivoting of the blades (5-6; 5'-6') when the fluid impinges on them to occur in both rotation directions and therefore when there is a sudden change in the direction of incidence of the fluid the turbine will not stop because the blades self-orientate, making the efficiency of energy transformation not be reduced due to the change of direction of incidence of the fluid.

In the embodiments of the invention shown, the blades have a planar configuration, their surface of incidence being perpendicular to the direction of incidence of the fluid. The blades can likewise have curved or helical configurations without this affecting the main object of the invention.

A last pair of secondary axles (4-4'), those located closest to the floor (10), has additionally been placed, which axles do not have any blade joined thereto and the main function of which is to act as a stop for the pivoting movement of the pair of axles located immediately above.

Each of the blades (5-6; 5'-6') has on its joining edge for the joining to its respective secondary axles (4-4') a counterweight (7-8-7'-8') spreading out in an opposite direction in relation to said axles to the position occupied by the blade, its mass being such that it tends to counteract the mass of the blade and therefore reduce the turning torque of each secondary axle (4-4'). Indeed, as can be seen in Figure 2 for example, said counterweights (7-8-7'-8') consist of small elements which in the case of the present embodiment are metal rod portions which are joined to the blade near its free ends on its upper edge, being located in the same plane defined by the surface of incidence of the fluid of each blade.

As regards the position of the counterweights (7-8-7'-8'), they can be located in any position comprised between the free end of the upper edge of the blade and its end closest to the main rotation axle (2). For the present embodiment, the positions of the counterweights will be defined near the free ends of the blades (5-6; 5'-6'). The shape of said counterweights (7-8-7'-8') can in turn also vary from that indicated in this embodiment of the invention.

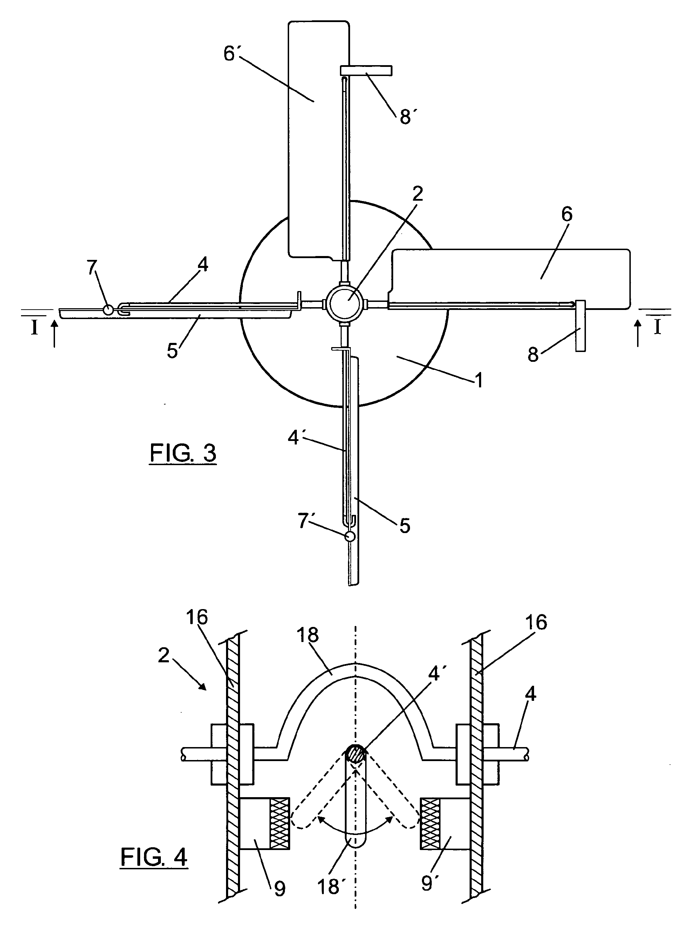

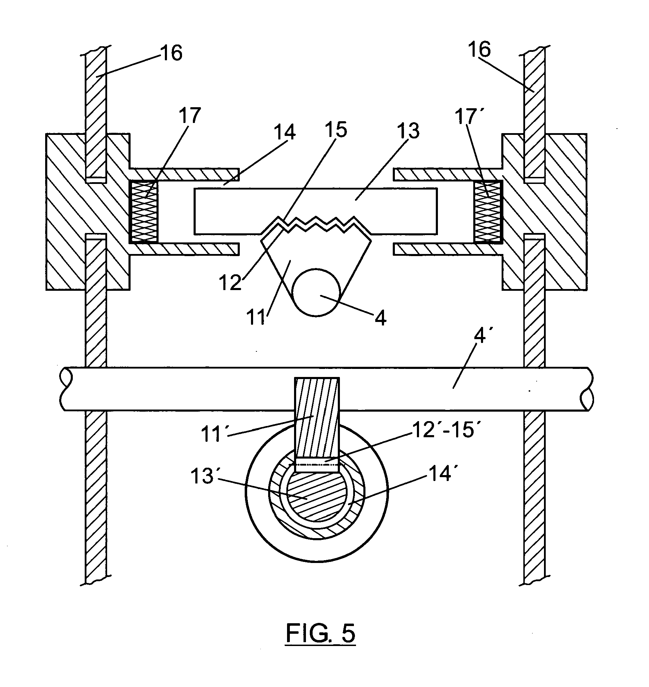

As can be seen in Figures 4 and 5, the main rotation axle (2) for this embodiment of the invention will be hollow, specifically having a cylindrical tubular shape.

In a first embodiment of the invention, Figure 4, the secondary axles of each pair of secondary axles will be located in the same plane and will therefore cross one another. Given that it is necessary for both secondary axles (4-4') to pivot in relation to the main rotation axle (2), it has been thought to provide them, in their central area traversing said main axle, with respective curvatures (18-18') with the same curvature radius, said radius being such that the pivoting movement is limited by the inner walls of the main rotation axle (2), the angular amplitude of said pivoting being a maximum of 90°. Figure 4 shows with dotted lines the possible limit positions of one of the curvatures (18'), covering a 90° angle as can be seen.

As can also be seen in said Figure 4, the concavities of the secondary axles (4-4') are arranged such that their concavities are opposite to one another, said configuration complies with the fact that as similar angular pivoting amplitudes are necessary for both secondary axles (4-4'), it is not possible for the concavities to coincide because to that end it would be necessary to make the curvature of one of the secondary axles with a smaller radius than the other one.

For the purpose of absorbing the impacts of said curvatures (18-18') against the inner walls of the main rotation axle (2), the axle on said walls has been provided with shock-absorbing stops (9-9').

In a second embodiment of the invention, Figure 5, the secondary axles (4-4') of each pair of secondary axles will be located in parallel planes separated by a small distance and therefore crossing one another. The ends of said secondary axles (4-4') are equidistant.

In this case, the secondary axle (4), which is arranged at the upper part according to the vertical direction, in its central area through which it traverses the main rotation axle, has attached thereto a drive element (11) at its upper part having an upper cogged area (12), a sliding element (13) with a length smaller than the inner diameter of the main rotation axle (2) being located immediately above said drive element, which sliding element moves on a sliding track (14) arranged inside the main rotation axle, the movement of the sliding element (13) being perpendicular to said main rotation axle (2) and having at the lower part a cogged area (15) on which the cogged area (12) of the drive element (11) is fitted, said sliding element (13) sliding on the mentioned sliding track (14) between two positions delimited by the wall (16) of the main rotation axle (2), such that the angular amplitude of the rotation or pivoting of the mentioned secondary axle (4) is a maximum of 90°.

The secondary axle (4') which is arranged at the lower part according to the vertical direction, in its central area through which it traverses the main rotation axle (2), has in turn attached thereto a drive element (11') at its lower part having a lower cogged area (12'), a sliding element (13') with a length smaller than the inner diameter of the main rotation axle (2) being located immediately below said drive element, which sliding element moves on a sliding track (14') arranged inside the main rotation axle, the movement of the sliding element (13') being perpendicular to said main rotation axle (2) and having at the upper part a cogged area (15') on which the cogged area (12') of the drive element (11') is fitted, said driving element (13') sliding on the mentioned sliding track (14') between two positions delimited by the wall (16) of the main rotation axle (2) such that the angular amplitude of the rotation of the mentioned secondary axle (4') is a maximum of 90°.

As can be seen in Figure 5, both sliding tracks (14-14') have at their boundaries with the wall (16) of the main rotation axle (2) respective shock-absorbing stops (17-17') for the purpose of acting as a shock absorbance in the impact of the sliding elements (13-13') against said pared (16) when both secondary axles (4-4') pivot due to the effect of the fluid impinging on them.

## Claims

1. A turbine comprising self-orientating blades which comprises,
a support base (1),
a main rotation axle (2) perpendicular to the direction of incidence of the fluid, configured to rotate in relation to the mentioned support base (1) and
a plurality of secondary axles (4-4') located at the intersection between at least one first axial plane of the main rotation axle (2) and a plurality of second planes which are perpendicular to said main rotation axle (2)
each secondary axle (4-4') being divided into two axle shafts by the main rotation axle (2)
each axle shaft having at least one blade (5-6,5'-6') integrally joined to said axle shaft such that the blade has a surface that is substantially perpendicular to the direction of incidence of the fluid
the blade (5-5') of one of the axle shafts being moved 90° in relation to the blade (6-6') of the other axle shaft,
**characterized in that**
the distance separating the second axial planes from the main rotation axle (2) is smaller than the width of the blades (5-6,5'-6') and **in that** the secondary axles (4-4') rotate freely in relation to the main rotation axle (2).

2. A turbine according to claim 1, **characterized in that** each blade (5-6,5'-6') is attached to each axle shaft from a joining edge.

3. A turbine according to claim 2, **characterized in that** each axle shaft has a counterweight (7-8;7'-8') diametrically opposite to the corresponding blade (5-6,5'-6') to reduce the turning torque of the secondary axle.

4. A turbine according to claim 3, **characterized in that** each counterweight (7-8;7'-8') consists of an element located at the upper edge of the blade (5-6,5'-6') in any one position selected from its free end and its end closest to the main rotation axle (2).

5. A turbine according to claim 4, **characterized in that** each of the counterweights (7-8;7'-8') is located in the same plane as that defined by the surface of incidence of the respective blade to which it is associated.

6. A turbine according to any of the previous claims, **characterized in that** the main rotation axle (2) is hollow.

7. A turbine according to any of claims 1 to 6, **characterized in that** the secondary axles (4-4') are organized in a plurality of groups of secondary axles, the ends of the secondary axles of one and the same group being equidistant and the secondary axles of one and the same group being located in one and the same plane.

8. A turbine according to claim 7, **characterized in that** for each group of secondary axles, the secondary axles (4-4'), in their central area through which they traverse the main rotation axle (2), undergo a radius curvature (18-18') such that their pivoting movement is limited by the inner wall (16) of the main rotation axle (2), the angular amplitude of the rotation of each of the secondary axles (4-4') being a maximum of 90°.

9. A turbine according to claim 7, **characterized in that** the concavities of the curvatures (18-18') of the secondary axles (4-4') of each group of secondary axles are arranged such that for half the secondary axles (4) the concavity is opposite to the concavity of the remaining secondary axles (4') of the group.

10. A turbine according to claim 9, **characterized in that** on the inner walls of the main rotation axle (2) there are arranged respective shock-absorbing stops (9-9') the position of which coincides with the contact area of the curvatures (18-18') of each of the secondary axles (4-4') of each of the groups of secondary axles with the inner wall (16) of main rotation axle (2).

11. A turbine according to any of claims 1 to 6, **characterized in that** the secondary axles (4-4') are organized in a plurality of groups of secondary axles, the ends of the secondary axles (4-4') of one and the same group being equidistant and the secondary axles of one and the same group being located in parallel planes separated by a reduced distance.

12. A turbine according to claim 11, **characterized in that** for each group of axles, each secondary axle (4-4'), in its central area through which it traverses the main rotation axle (2), has attached thereto a drive element (11-11') having a cogged area (12-12'), a sliding element (13-13') with a length smaller than the inner diameter of the main rotation axle (2) being located after said drive element, which sliding element moves on a sliding track (14-14') arranged inside the main rotation axle (2), the movement of the sliding element (13-13') being perpendicular to said main rotation axle (2) and also perpendicular to the secondary axle, also having a conjugated cogged area (15-15') located opposite to the cogged area (12-12') of the drive element (11-11'), said sliding element (13-13') sliding on the mentioned sliding track (14-14') when the drive element (11-11') rotates due to the effect of the rotation of the corresponding secondary axle (4-4'), the movement of the sliding element (13-13') taking place between two positions delimited by the wall (16) of the main rotation axle (2), such that the angular amplitude of the rotation of the mentioned axle is a maximum of 90°.

13. A turbine according to claim 12, **characterized in that** the sliding tracks (14-14') at their ends coinciding with the inner wall (16) of the main rotation axle (2) have respective shock-absorbing stops (17-17').
